# EUROPEAN PATENT APPLICATION

(11) **EP 2 311 549 A1**
(43) Date of publication of application: **20.04.2011**
(21) Application number: 09804879.6
(22) Date of filing: 23.07.2009
(51) Int. Cl.: B01D 53/94, B01D 53/64, B01J 35/04, F23J 15/00

(54) **APPARATUS FOR TREATING DISCHARGE GAS AND SYSTEM FOR TREATING DISCHARGE GAS**

(30) Priority: 07.08.2008 JP 2008204707
(71) Applicant: Mitsubishi Heavy Industries, Ltd., Tokyo 108-8215 (JP)
(72) Inventor: SATO, Toshihiro, 851-0392 Nagasaki, Nagasaki-ken (JP); SAKATA, Nobuyasu, 851-0392 Nagasaki, Nagasaki-ken (JP); SHIJO, Rikuma, 851-0392 Nagasaki, Nagasaki-ken (JP); MURAKAMI, Moritoshi, 729-0393 Mihara Hiroshima-ken (JP); UKAI, Nobuyuki, 733-8553 Hiroshima-ken (JP); NOCHI, Katsumi, 733-8553 Hiroshima-ken (JP); KIYOSAWA, Masashi, 850-8610 Nagasaki-ken (JP)
(74) Representative: Intès, Didier Gérard André
(86) International application number: PCT/JP2009/063194
(87) International publication number: WO 2010/016392

(57) **Abstract**

An air pollution control apparatus (10) according to an embodiment of the present invention has a denitration catalyst layer (13) that removes nitrogen oxides in flue gas, and atomizes hydrochloric acid into flue gas to oxidize mercury, and also includes a swirling-flow generating member (15A) including a vertical axis (22) provided in a passage (14) of a honeycomb catalyst, and four swirling-flow generating vanes (23) provided radially with respect to the vertical axis (22) for generating a turbulent flow in flue gas, with the swirling-flow generating vanes (23) being arranged in a direction of the vertical axis (22) with a predetermined gap therebetween. With this configuration, by generating a swirling flow in flue gas in the passage (14) in the denitration catalyst layer (13), a contact time between flue gas and a denitration catalyst can be increased, and the oxidation reaction efficiency between mercury in flue gas and the denitration catalyst can be improved.

## Description

### Field

The present invention relates to an air pollution control apparatus and an air pollution control system that process flue gas discharged from a combustion device. Background

Because mercury having high toxicity is included in flue gas discharged from a coal combustion boiler, which is a combustion device, for example, in a thermal power plant, various systems for removing mercury in flue gas have been conventionally studied.

Generally, a wet type desulfurizer for removing sulfur contents in flue gas is provided in the coal combustion boiler. In a flue-gas processing plant where a desulfurizer is attached to the boiler as an air pollution control apparatus, it is well known that if chlorine (Cl) contents in flue gas increase, the percentage of divalent metallic mercury (Hg) soluble in water increases, and thus the desulfurizer can easily collect mercury.

Recently, therefore, various processing methods and processing apparatuses of metallic mercury have been devised by combining NOx removal unit that reduces NOx and a wet type desulfurizer that uses an alkaline absorbent as a sulfur oxide (SOx) absorbent.

As a method of processing metallic mercury in flue gas, a removal method using an adsorbent such as activated carbon or a selenium filter has been known. However, this method requires a special adsorption removal unit, and thus it is not suitable for processing of large-capacity flue gas such as flue gas from a power plant.

Therefore, as a method of processing metallic mercury in large-capacity flue gas, there has been proposed a method such that a chlorinating agent is gas-atomized on an upstream side of NOx removal unit at a high temperature in a flue gas duct, mercury is oxidized (chlorinated) on a denitration catalyst to prepare soluble mercury chloride, and the mercury chloride is absorbed in a wet desulfurizer installed on a downstream side (see, for example, Patent Literatures 1 and 2). Further, an apparatus that atomizes gas to a flue gas duct and a technique therefor have been put to practical use in atomization of NH₃ by NOx removal unit and gas atomization of the chlorinating agent.

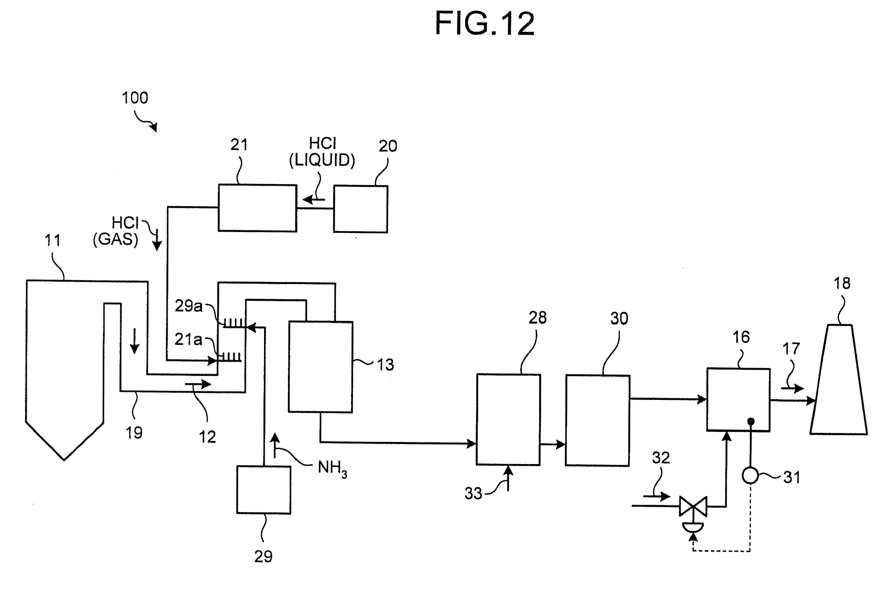

FIG. 12 is a schematic diagram of an air pollution control system of a coal combustion boiler. As shown in FIG. 12, a conventional air pollution control system 100 includes a denitration catalyst layer 13 that removes nitrogen oxides (NOx) in flue gas 12 from a coal combustion boiler 11 that supplies coal as a fuel, and atomizes hydrochloric acid (HCl) into the flue gas 12 to oxidize mercury (Hg), an air preheater 28 that recovers heat in the flue gas 12 after removal of nitrogen oxides (NOx), an electronic precipitator 30 that removes dust in the flue gas 12 after heat recovery, a desulfurizer 16 that removes sulfur oxides (SOx) and mercury (Hg) in the flue gas 12 after dust removal, and a stack 18 that discharges the flue gas 12 that has undergone desulfurization to the outside as purged gas 17.

Further, an injection spot of hydrochloric acid (HCl) is provided in a flue gas duct 19 on an upstream side of the NOx removal unit 13, and hydrochloric acid (liquid) stored in a hydrochloric acid (liquid HCl) supplying unit 20 is gasified in a hydrogen chloride (HCl) atomizing unit 21 and atomized to the flue gas 12 as hydrogen chloride via a hydrogen chloride (HCl) atomizing nozzle 21a.

Further, an injection spot of ammonia (NH₃) is provided in the flue gas duct 19 on an upstream side of the NOx removal unit 13, and ammonia (NH₃) supplied from an NH₃ supplying unit 29 is atomized to the flue gas 12 by an ammonia (NH₃) atomizing nozzle 29a, to reduce nitrogen oxides (NOx).
In FIG. 12, reference numerals 31 and 32 denote an oxidation-reduction potential controller (ORP controller) and air, respectively.

The flue gas 12 from the boiler 11 is supplied to the denitration catalyst layer 13 and supplied to the electronic precipitator 30 after having heated air 33 by heat exchange in the air preheater 28, and further supplied to the desulfurizer 16, and then discharged to the air as the purged gas 17.

To suppress the influence of the chlorinating agent on an apparatus such as corrosive breakage and improve the reliability of the apparatus, the mercury concentration in flue gas, which has undergone wet desulfurization, is measured by a mercury monitor, and a feed rate of the chlorinating agent is adjusted based on the mercury concentration after desulfurization (see, for example, Patent Literature 2).

In this manner, conventionally, NOx (nitrogen oxides) in the flue gas 12 is removed and mercury (Hg) in the flue gas 12 is oxidized by supplying hydrogen chloride and ammonia into the flue gas 12.

That is, NH₃ is used for reduction and denitration of NOx, and NH₃ supplied from the NH₃ supplying unit 29 is atomized into the flue gas 12 via the ammonia (NH₃) atomizing nozzle 29a. In the denitration catalyst layer 13, NOx is substituted by nitrogen (N₂) by a reduction reaction as shown in the following equations, and then denitrated.

4NO+4NH₃+O₂ → 4N₂+6H₂O ...(1) (1)

NO+NO₂+2NH₃ → 2N₂+3H₂O ... (2) (2)

Hydrogen chloride is used for mercury oxidation, and the hydrogen chloride used as the chlorinating agent is supplied from the liquid HCl supplying unit 20 to the HCl atomizing unit 21, where hydrochloric acid is gasified, and atomized into the flue gas 12 as hydrogen chloride (HCl) by the HCl atomizing nozzle 21a. Accordingly, in the denitration catalyst layer 13, Hg having low solubility is oxidized (chlorinated) on the denitration catalyst as shown in the following equation, and converted to highly soluble mercury chloride (HgCl₂), thereby removing Hg contained in the flue gas 12 by the desulfurizer 16 provided on a downstream side.

Hg+2HCl+1/20₂ → HgCl₂+H₂O ... (3) (3)

Further, when coal or heavy oil is used as a fuel, because Cl is contained in the fuel, combustion gas contains Cl components. However, the content of the Cl components in the fuel varies depending on the type of fuel, and thus it is difficult to control the Cl concentration in flue gas. Therefore, it is desired that HCl and the like in an amount more than required is added to the flue gas on an upstream side of the denitration; catalyst layer 13 to remove mercury reliably.

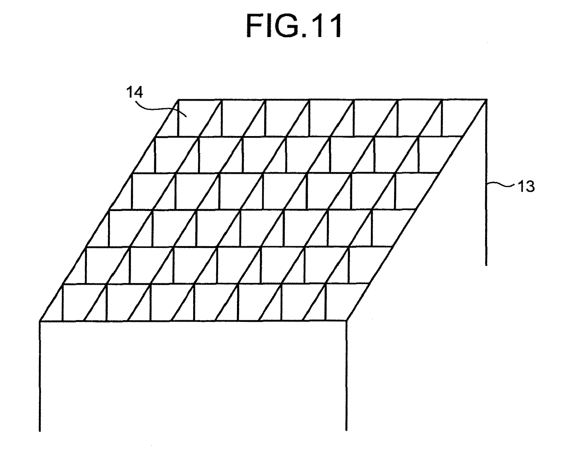

Further, as the denitration catalyst layer 13, as shown in FIG. 11, a layer in which a denitration catalyst is supported on a honeycomb layer having square passages 14 arranged in a reticular pattern is used, and a cross-sectional shape of the passage is a multangular shape such as triangle or square.

### Citation List

### Patent Literature

Patent Literature 1: Japanese Patent Application Laid-open No. H10-230137
Patent Literature 2: Japanese Patent Application Laid-open No. 2001-198434

### Summary

### Technical Problem

An air current of the flue gas 12 supplied to the conventional denitration catalyst layer 13 is rectified by a rectifying unit (not shown) just before the denitration catalyst layer 13 to be in a laminar flow state, and flows into the honeycomb passage 14 in the denitration catalyst layer 13 in this state. Therefore, a contact area between the denitration catalyst and flue gas is limited, and as a result, it is difficult to further improve the oxidation reaction efficiency of mercury.

The present invention has been achieved to solve the above problems, and an object of the present invention is to provide an air pollution control apparatus and an air pollution control system that can increase a contact area between flue gas supplied into NOx removal unit and a denitration catalyst to further improve the oxidation reaction efficiency of mercury in the flue gas.

### Solution to Problem

According to an aspect of the present invention, an air pollution control apparatus includes at least one denitration catalyst layer that removes nitrogen oxides in flue gas from a boiler and atomizes hydrogen chloride into flue gas to oxidize mercury. The denitration catalyst layer is a honeycomb catalyst, and the air pollution control apparatus includes a swirling-flow generating member that changes the flue gas from a laminar flow to a turbulent flow in a passage of the honeycomb catalyst.

Advantageously, in the air pollution control apparatus, the swirling-flow generating member includes a vertical axis provided in the passage, and a plurality of swirling-flow generating vanes provided radially and orthogonally to the vertical axis with a predetermined gap therebetween to generate a turbulent flow in the flue gas.

Advantageously, in the air pollution control apparatus, the swirling-flow generating member includes a vertical axis provided in the passage, and a plurality of ring members provided orthogonally to the vertical axis with a predetermined gap therebetween.

Advantageously, in the air pollution control apparatus, the swirling-flow generating member includes a vertical axis provided in the passage, and a spiral board spirally wound on the vertical axis.

Advantageously, in the air pollution control apparatus, the swirling-flow generating member is a plate member having a fine pore corresponding to each passage of a honeycomb catalyst, and when the denitration catalyst layers are provided at a plurality of stages in a flow direction of the flue gas, the swirling-flow generating member is provided in each passage between the denitration catalyst layers at respective stages.

According to another aspect of the present invention, an air pollution control system includes: a boiler; a chlorinating-agent supplying unit that injects a chlorinating agent into flue gas discharged to a flue gas duct on a downstream side of the boiler; the air pollution control apparatus according to any one of the air pollution control apparatus described above; a NOx removal unit that removes sulfur oxides in flue gas after denitration; and a stack that discharges denitrated gas to outside.

Advantageously, in the air pollution control system, an ammonia supplying unit that injects ammonia into flue gas discharged to a flue gas duct on a downstream side of the boiler is provided.

### Advantageous Effects of Invention

According to the present invention, the swirling-flow generating member that changes the flue gas from a laminar flow to a turbulent flow is provided in the passage in a denitration catalyst layer that removes nitrogen oxides in the flue gas from the boiler. Therefore, a swirling flow can be generated in the flue gas in the passage in the denitration catalyst layer to change an airflow of the flue gas from a laminar flow to a turbulent flow, and the flue gas in the turbulent state can flow in the passage in the denitration catalyst layer, thereby enabling to increase a contact time between the flue gas and the denitration catalyst.
Therefore, the oxidation reaction efficiency between mercury in the flue gas and the denitration catalyst can be improved by supplying HCl beforehand into the flue gas. With this configuration, mercury in the flue gas can be removed highly efficiently by the NOx removal unit provided on a downstream side of the air pollution control apparatus.

Further, because reduction performance of NOx and oxidation performance of mercury in flue gas can be improved, an amount of denitration; catalyst used in the denitration catalyst layer can be reduced, and a feed rate of the chlorinating agent supplied to the flue gas can be also reduced.

### Brief Description of Drawings

FIG. 1 is a schematic diagram of an air pollution control apparatus according to a first embodiment of the present invention.
FIG. 2 is a perspective view of a part of a configuration of a denitration catalyst layer.
FIG. 3 depicts a swirling-flow generating member as viewed from a direction orthogonal to a direction of a vertical axis.
FIG. 4 depicts the swirling-flow generating member as viewed from a direction of a vertical axis of a denitration catalyst layer.
FIG. 5 depicts a swirling-flow generating member of an air pollution control apparatus according to a second embodiment of the present invention as viewed from a direction orthogonal to a direction of a vertical axis.
FIG. 6 depicts the swirling-flow generating member of the air pollution control apparatus according to the second embodiment of the present invention as viewed from a direction of a vertical axis of a denitration catalyst layer.
FIG. 7 depicts a swirling-flow generating member of an air pollution control apparatus according to a third embodiment of the present invention as viewed from a direction orthogonal to a direction of a vertical axis.
FIG. 8 depicts the swirling-flow generating member of the air pollution control apparatus according to the third embodiment of the present invention as viewed from a direction of a vertical axis of a denitration catalyst layer.
FIG. 9 depicts a swirling-flow generating member of an air pollution control apparatus according to a fourth embodiment of the present invention as viewed from a direction orthogonal to a direction of a vertical axis.
FIG. 10 depicts the swirling-flow generating member of the air pollution control apparatus according to the fourth embodiment of the present invention as viewed from a direction of a vertical axis of a denitration catalyst layer.
FIG. 11 is a perspective view of a honeycomb catalyst.
FIG. 12 is a schematic diagram of an air pollution control system of a coal combustion boiler.

### Description of Embodiments

Exemplary embodiments of the present invention will be explained below in detail with reference to the accompanying drawings. The present invention is not limited to the embodiments. In addition, constituent elements in the following embodiments include those that can be easily assumed by persons skilled in the art or that are substantially equivalent.

### First embodiment

An air pollution control system that applies the air pollution control apparatus according to an embodiment of the present invention is explained with reference to the drawings. The configuration of the air pollution control system applying the air pollution control apparatus according to the present embodiment is identical to the configuration of the air pollution control system shown in FIG. 12. Therefore, in the present embodiment, only the configuration of the air pollution control apparatus is explained.

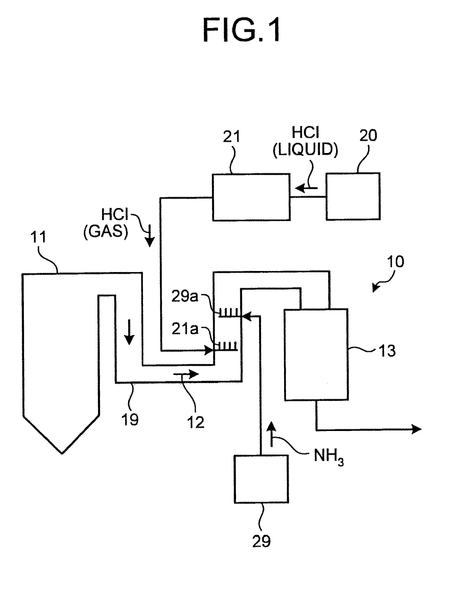

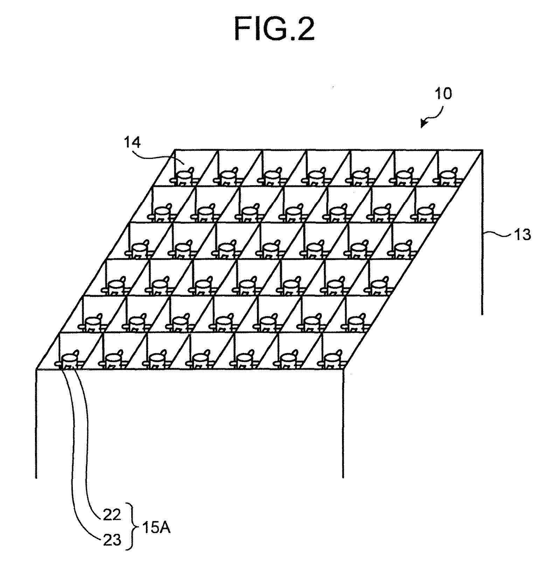

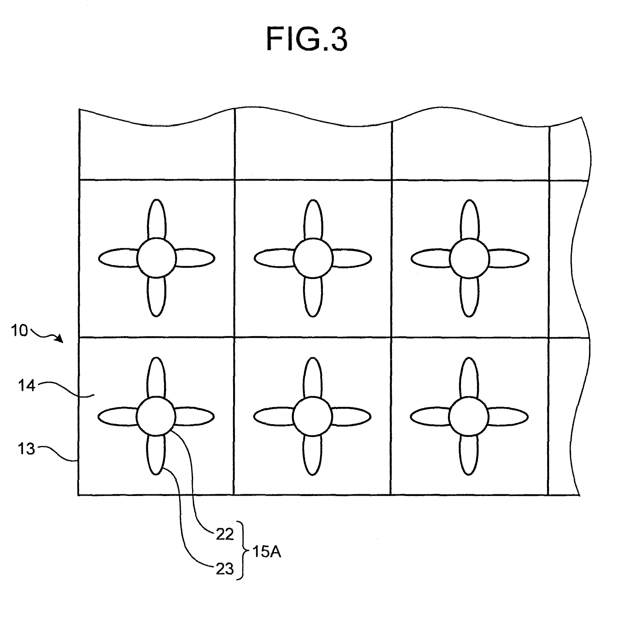

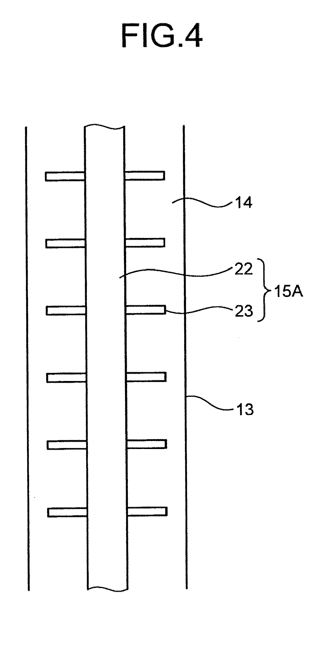

FIG. 1 is a schematic diagram of the air pollution control apparatus according to this embodiment. FIG. 2 is a perspective view of a part of a configuration of a denitration catalyst layer. FIG. 3 depicts a swirling-flow generating member as viewed from a direction orthogonal to a direction of a vertical axis. FIG. 4 depicts the swirling-flow generating member as viewed from a direction of a vertical axis of the denitration catalyst layer.
The configuration shown in FIG. 1 is a part of the air pollution control system shown in FIG. 12, and thus like reference numerals are denoted to like members in the conventional configuration and redundant explanations thereof will be omitted.
As shown in FIG. 1, an air pollution control apparatus 10 according to the present embodiment includes the denitration catalyst layer 13 that removes nitrogen oxides (NOx) in the flue gas 12 from the boiler 11, and atomizes hydrochloric acid (HCl) into the flue gas 12 to oxidize mercury (Hg). The denitration catalyst layer 13 is a honeycomb catalyst and a swirling-flow generating member (not shown) that changes the flue gas 12 from a laminar flow to a turbulent flow is provided in the passages in the denitration catalyst layer 13.

As shown in FIGS. 2 to 4, a swirling-flow generating member 15A of the air pollution control apparatus 10 according to the present embodiment includes a vertical axis 22 provided in the passage 14 of the honeycomb catalyst, and four swirling-flow generating vanes 23 provided radially with respect to the vertical axis 22 for generating a turbulent flow in the flue gas 12, with the four swirling-flow generating vanes 23 being arranged in a direction of the vertical axis 22 with a predetermined gap therebetween.

Further, in the present embodiment, the four swirling-flow generating vanes 23 are arranged in a cruciform on the vertical axis 22 as viewed from a direction of the vertical axis 22, and a shape of the swirling-flow generating vane 23 as viewed from a direction of the vertical axis 22 is elliptical. Further, a set of the swirling-flow generating vanes 23 provided on a downstream side of the flue gas 12 as viewed from a direction of the vertical axis 22 is provided to overlap on a set of the swirling-flow generating vanes 23 provided on an upstream side of the flue gas 12.

In this manner, by providing the swirling-flow generating member 15A in each of the honeycomb passages 14 in the denitration catalyst layer 13, a swirling flow can be generated in the flue gas 12 in the passage 14 in the denitration catalyst layer 13, and the flue gas 12 can pass through the passage 14 in the denitration catalyst layer 13, in a state with an airflow of the flue gas 12 being changed from a laminar flow to a turbulent flow. Therefore, the contact time between the flue gas 12 and the denitration catalyst can be increased. Accordingly, the oxidation reaction efficiency between mercury in the flue gas 12 and the denitration catalyst can be improved by supplying HCl beforehand into the flue gas 12.

With this configuration, Hg in the flue gas 12 can be removed highly efficiently by the desulfurizer (not shown) provided on a downstream side of the air pollution control apparatus 10.

Because reduction performance of NOx and oxidation performance of mercury in the flue gas 12 can be improved, an amount of denitration catalyst used in the denitration catalyst layer 13 can be reduced, and an HCl amount supplied to the flue gas 12 can be also reduced.

The number of the swirling-flow generating vanes 23 fixed to the vertical axis 22 is not limited to four, and two or three, or five or more vanes can be provided, so long as the flue gas 12 can be swirled to generate a turbulent flow. The vertical axis 22 is fixed on both sides and below the denitration catalyst layer 13. A fixing method thereof is not particularly limited, and a fixing member (not shown) for fixing the vertical axis 22 on the both sides above and below the denitration catalyst layer 13 can be provided.

A reaction container for housing the denitration catalyst layer 13 outside of the denitration catalyst layer 13 or a fixing member (not shown) for fixing the vertical axis 22 to the flue gas duct 19 can be provided to fix upper and lower sides of the vertical axis 22 protruding from the denitration catalyst layer 13.

As shown in FIGS. 2 and 4, the size of cross section of the passage 14 in the denitration catalyst layer 13 is conventionally as narrow as 5 millimeters square in order to improve the contact efficiency between the flue gas 12 and the denitration catalyst and reduce pressure loss in the flue gas 12. In the present embodiment, in order to provide the swirling-flow generating member 15A in each of the passages 14 in the denitration catalyst layer 13, and reduce pressure loss in the flue gas 12, while improving the contact efficiency between the flue gas 12 and the denitration catalyst, a length of one side of each of the passages 14 in the denitration catalyst layer 13 can be increased than in the conventional case, for example, up to 7 to 10 millimeters square.

Further, in the air pollution control apparatus 10 according to the present embodiment, the set of the swirling-flow generating vanes 23 is provided in a plurality of numbers so that the set of the swirling-flow generating vanes 23 provided on a downstream side of the flue gas 12 as viewed from the direction of the vertical axis 22 overlaps on the set of the swirling-flow generating vanes 23 provided on an upstream side of the flue gas flue gas 12. However, the present invention is not limited thereto. For example, a part or all of the set of the swirling-flow generating vanes 23 provided on a downstream side of the flue gas 12 as viewed from the direction of the vertical axis 22 can be provided, with the position thereof being shifted with respect to the vertical axis 22, so that the swirling-flow generating vanes 23 do not overlap on the set of the swirling-flow generating vanes 23 provided on an upstream side of the flue gas 12. Accordingly, a swirling flow can be generated in the flue gas 12 more efficiently.

In the present embodiment, the shape of the swirling-flow generating vane 23 as viewed from the direction of the vertical axis 22 is elliptical. However, the present invention is not limited thereto, and it is only necessary to generate a swirling flow in the flue gas 12. Therefore, the shape of the swirling-flow generating vane 23 can be, for example, triangle or square.

In the air pollution control apparatus 10 according to the present embodiment, only one denitration catalyst layer 13 is arranged. However, the present invention is not limited thereto, and a plurality of denitration catalyst layers 13 can be arranged.

In the present embodiment, because only one denitration catalyst layer 13 is arranged in the flue gas duct 19, only one swirling-flow generating member 15A is provided. However, when a plurality of denitration catalyst layers 13 are provided in the flue gas duct 19, the swirling-flow generating member 15A can be provided between respective denitration catalyst layers 13.

In the air pollution control apparatus 10 according to the present embodiment, as the denitration catalyst used in the denitration catalyst layer 13 for reduction and denitration, metal oxides such as V, W, Mo, Ni, Co, Fe, Cr, Mn, and Cu, or sulfate, or noble metals such as Pt, Ru, Rh, Pd, and Ir, or one in which a mixture thereof is supported on a carrier such as titania, silica, zirconia, complex oxides thereof, or zeolite can be used.

In the present embodiment, although there is no particular limitation on the concentration of HCl to be used, for example, from concentrated hydrochloric acid to dilute hydrochloric acid of about 5% can be used. In the present embodiment, hydrogen chloride (HCl) is explained as the chlorinating agent to be used. However, the present invention is not limited thereto, and the chlorinating agent can be an agent in which Hg in flue gas reacts in the presence of a denitration catalyst to generate mercury chloride of HgCl and/or HgCl₂. As such a chlorinating agent, ammonium chloride, chlorine, hypochlorous acid, ammonium hypochlorite, chlorite, ammonium chlorite, chlonic acid, ammonium chlorate, perchloric acid, ammonium perchlorate, amine salts of above acids, and other salts can be exemplified.

The amount of chlorinating agent to be added in the flue gas 12 can be a stoichiometric amount or more with respect to poorly water-soluble mercury. As the concentration of the chlorinating agent in the flue gas 12 in the flue gas duct 19, the chlorinating agent can be atomized in an amount of 1000 ppm or less with respect to the flue gas 12, taking into consideration efficient removal of Hg in the flue gas 12 and the concentration of chlorine in discharged water discharged on a downstream side.

A mixing position of HCl with the flue gas 12 in the flue gas duct 19 is set to be on an upstream side of a mixing position of NH₃; however, it can be on a downstream side of the mixing position of NH₃.

In the present embodiment, both the HCl and NH₃ are added to the flue gas 12 discharged from the boiler 11. However, NH₃ may not be added to the flue gas 12 in the flue gas duct 19. It is because the denitration catalyst layer 13 in the air pollution control apparatus 10 is for removing NOx in the flue gas 12 and oxidizing Hg in the flue gas 12 to remove Hg by the desulfurizer (not shown) provided on a downstream side, and there is the same effect of removing Hg by the desulfurizer (not shown) by converting Hg to chlorides by HCl in the presence of the denitration catalyst in the denitration catalyst layer 13, even if NH₃ is not added to the flue gas 12 in the flue gas duct 19.

As described above, according to the air pollution control apparatus 10 of the present embodiment, the denitration catalyst layer 13 that removes NOx in the flue gas 12 from the boiler 11, and atomizes HCl into the flue gas 12 to oxidize Hg is provided. The denitration catalyst layer 13 is a honeycomb catalyst, and the swirling-flow generating member 15A including the vertical axis 22 and the four swirling-flow generating vanes 23 provided radially with respect to the vertical axis 22 is provided in each of the passages in the denitration catalyst layer 13, with the four swirling-flow generating vanes 23 being arranged in a plurality of numbers with a gap therebetween in the direction of the vertical axis 22. Accordingly, a swirling flow can be generated in the flue gas 12 in the passages 14 in the denitration catalyst layer 13, and the flue gas 12 can pass through the passages 14 in the denitration catalyst layer 13 in a state with the airflow of the flue gas 12 being changed from a laminar flow to a turbulent flow, and thus the contact time between the flue gas 12 and the denitration catalyst can be increased. Because HCl has been supplied beforehand into the flue gas 12, the oxidation reaction efficiency between Hg in the flue gas 12 and the denitration catalyst can be improved. As a result, in the air pollution control system applying the air pollution control apparatus 10 according to the present embodiment, Hg can be removed highly efficiently by the desulfurizer (not shown) provided on a downstream side of the air pollution control apparatus 10.

Further, because reduction performance of NOx and oxidation performance of Hg in the flue gas 12 can be improved, the amount of denitration catalyst to be used in the denitration catalyst layer 13 can be decreased, and the amount of HCl to be supplied to the flue gas 12 can be also decreased.

The present embodiment has been explained above by using flue gas discharged from a boiler of a thermal power plant that burns fossil fuel including sulfur, mercury and the like, such as coal and heavy oil. However, the present invention is not limited thereto, and can be applied to flue gas having a low concentration of NOx and containing carbon dioxide, oxygen, SOx, dust, or moisture, boiler flue gas discharged from a factory or the like that burns fuel containing sulfur, mercury and the like, and heating furnace flue gas discharged from a metal factory, a petroleum refining plant, a petrochemical plant and the like.

### Second embodiment

An air pollution control system that applies an air pollution control apparatus according to a second embodiment of the present invention is explained with reference to the drawings. The configuration of the air pollution control system applying the air pollution control apparatus according to the present embodiment is identical to the configuration of the air pollution control system shown in FIG. 12, as in the first embodiment. Therefore, in the present embodiment, only a configuration of the air pollution control apparatus is explained.
The configuration of the air pollution control apparatus according to the present embodiment is identical to that of the air pollution control apparatus according to the first embodiment, and thus illustrations of the configuration of the air pollution control apparatus according to the present embodiment are omitted and explanations are made only by referring to the drawings of a configuration of a swirling-flow generating member.

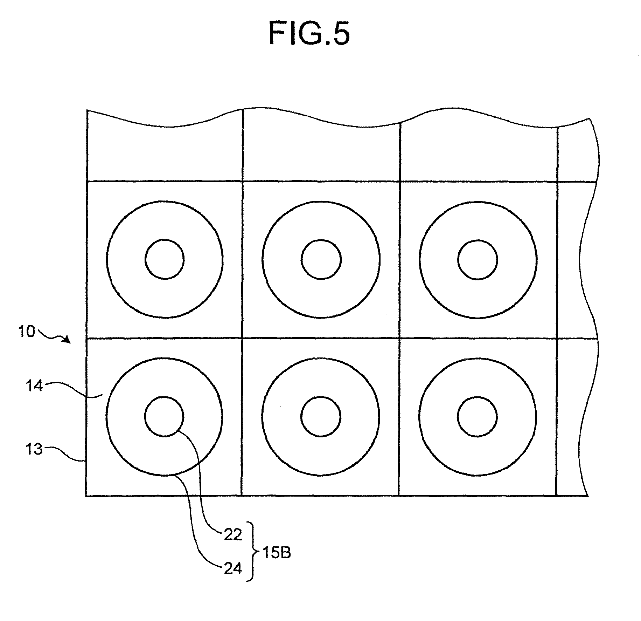

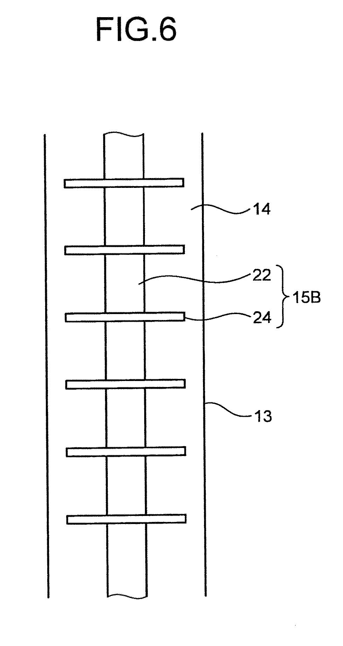

FIG. 5 depicts a swirling-flow generating member as viewed from a direction orthogonal to a direction of a vertical axis, and FIG. 6 depicts the swirling-flow generating member as viewed from a direction of a vertical axis of the denitration catalyst layer.
Like reference numerals are denoted to like members in the air pollution control apparatus shown in FIG. 1, and explanations thereof will be omitted.
As shown in FIGS. 5 and 6, a swirling-flow generating member 15B of the air pollution control apparatus according to the present embodiment includes the vertical axis 22 provided in the passage 14, and a plurality of ring members 24 provided orthogonal to the vertical axis 22 with a predetermined gap therebetween.

By providing the swirling-flow generating member 15B including the vertical axis 22 provided in the passage 14, and the ring members 24 provided orthogonal to the vertical axis 22 with a predetermined gap therebetween, in the passage 14 in the denitration catalyst layer 13, as in the above embodiment, a swirling flow can be generated in the flue gas 12 in the passages 14 in the denitration catalyst layer 13, and the flue gas 12 can pass through the passages 14 in the denitration catalyst layer 13, in a state with the airflow of the flue gas 12 being changed from a laminar flow to a turbulent flow, and thus the contact time between the flue gas 12 and the denitration catalyst can be increased. Because HCl has been supplied beforehand into the flue gas 12, the oxidation reaction efficiency between Hg in the flue gas 12 and the denitration catalyst can be improved.

Accordingly, in the air pollution control system applying the air pollution control apparatus according to the present embodiment, Hg in the flue gas 12 can be removed highly efficiently by a desulfurizer (not shown) provided on a downstream side of the air pollution control apparatus according to the present embodiment.

### Third embodiment

An air pollution control system that applies an air pollution control apparatus according to a third embodiment of the present invention is explained with reference to the drawings. The configuration of the air pollution control system applying the air pollution control apparatus according to the present embodiment is identical to the configuration of the air pollution control system shown in FIG. 12, as in the first embodiment. Therefore, in the present embodiment, only a configuration of the air pollution control apparatus is explained.
Further, the configuration of the air pollution control apparatus according to the present embodiment is identical to that of the air pollution control apparatus according to the first embodiment, and thus illustrations of the configuration of the air pollution control apparatus according to the present embodiment are omitted and explanations are made only by referring to the drawings of a configuration of a swirling-flow generating member.

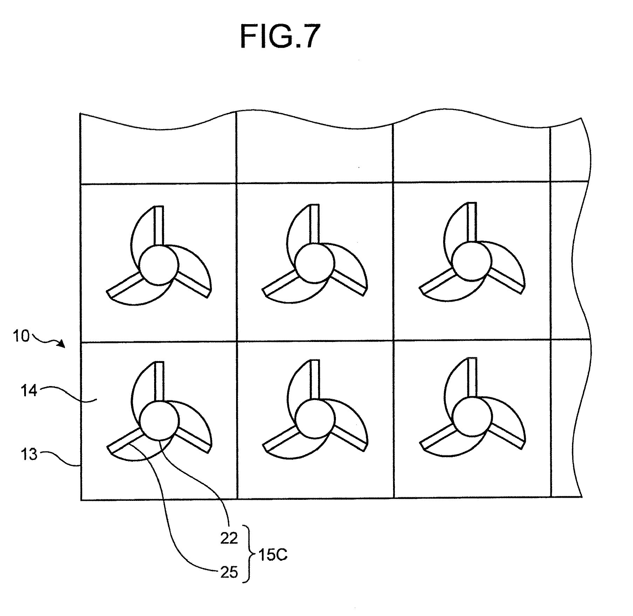

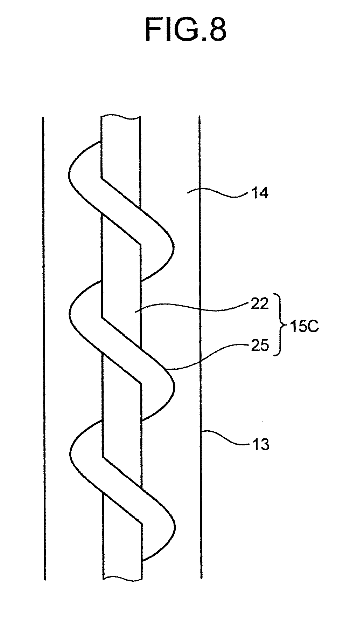

FIG. 7 depicts a swirling-flow generating member as viewed from a direction orthogonal to a direction of a vertical axis, and FIG. 8 depicts the swirling-flow generating member as viewed from a direction of a vertical axis in the denitration catalyst layer.
Like reference numerals are denoted to like members in the air pollution control apparatus shown in FIG. 1, and explanations thereof will be omitted.
As shown in FIGS. 7 and 8, a swirling-flow generating member 15C of the air pollution control apparatus according to the present embodiment includes the vertical axis 22 provided in the passage 14, and a spiral board 25 spirally wound on the vertical axis 22.

By providing the swirling-flow generating member 15C including the vertical axis 22 and the spiral board 25 spirally wound on the vertical axis 22, in the passage 14 in the denitration catalyst layer 13, as in the above embodiments, a swirling flow can be generated in the flue gas 12 in the passages 14 in the denitration catalyst layer 13, and the flue gas 12 can pass through the passages 14, in a state with the airflow of the flue gas 12 being changed from a laminar flow to a turbulent flow, and thus the contact time between the flue gas 12 and the denitration catalyst can be increased. Because HCl has been supplied beforehand into the flue gas 12, the oxidation reaction efficiency between Hg in the flue gas 12 and the denitration catalyst can be improved.

Accordingly, in the air pollution control system applying the air pollution control apparatus according to the present embodiment, Hg in the flue gas 12 can be removed highly efficiently by a desulfurizer (not shown) provided on a downstream side of the air pollution control apparatus according to the present embodiment.

### Fourth Embodiment

An air pollution control system that applies an air pollution control apparatus according to a fourth embodiment of the present invention is explained with reference to the drawings. The configuration of the air pollution control system applying the air pollution control apparatus according to the present embodiment is identical to the configuration of the air pollution control system shown in FIG. 12, as in the first embodiment. Therefore, in the present embodiment, only a configuration of the air pollution control apparatus is explained.
Further, because the configuration of the air pollution control apparatus according to the present embodiment is identical to that of the air pollution control apparatus according to the first embodiment, and thus illustrations of the configuration of the air pollution control apparatus according to the present embodiment are omitted and explanations are made only by referring to the drawings of a configuration of a swirling-flow generating member.

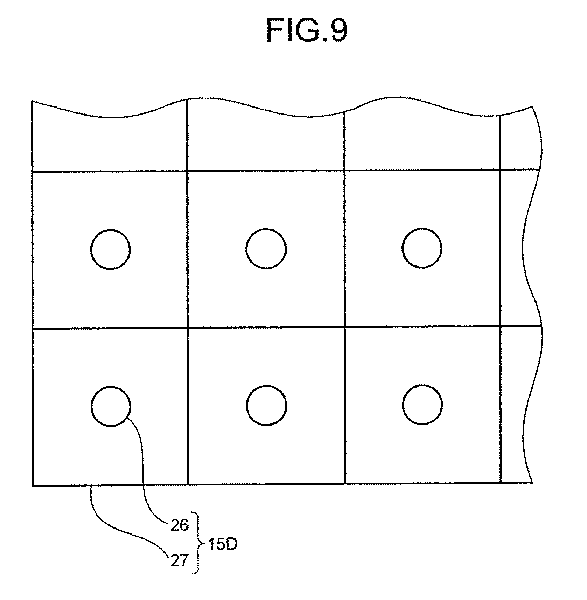

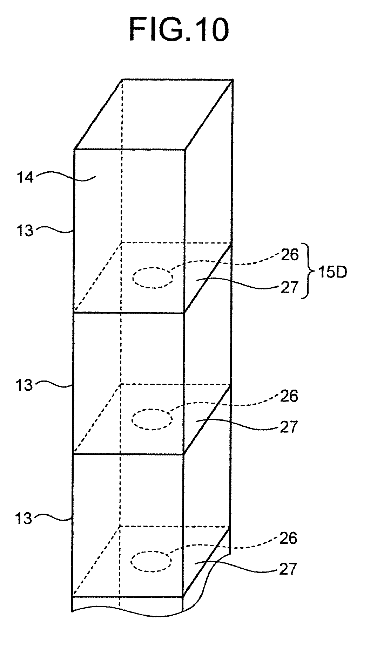

FIG. 9 depicts a swirling-flow generating member as viewed from a direction orthogonal to a direction of a vertical axis, and FIG. 10 depicts the swirling-flow generating member as viewed from a direction of a vertical axis in the denitration catalyst layer.
Like reference numerals are denoted to like members in the air pollution control apparatus shown in FIG. 1, and explanations thereof will be omitted.
As shown in FIGS. 9 and 10, a swirling-flow generating member 15D of the air pollution control apparatus according to the present embodiment is a plate member 27 having a fine pore 26 corresponding to each of the passages 14 of the honeycomb catalyst, and when the denitration catalyst layers 13 are provided at four stages in a flow direction of the flue gap 12, the swirling-flow generating member 15D is provided in each of the passages 14 between respective stages of the denitration catalyst layers, provided at four stages in the flow direction of the flue gas 12.

That is, the fine pore 26 corresponding to the honeycomb passage becomes an opening for the flue gas 12 to come out in a jet flow, and functions as an orifice. Because the fine pore 26 functions as a diaphragm of a flue gas passage, the fine pore 26 has a function of controlling a flow rate of the flue gas 12. When the flue gas 12 passes through the fine pores 26, the flue gas 12 comes out in a jet flow from the fine pore 26, and thus the flue gas 12 can swirl in the passage 14 and pass through the passage 14 .

In the present embodiment, because the denitration catalyst layer 13 includes four stages in the flow direction of the flue gas 12, in total three swirling-flow generating members 15D are provided in the passages 14 between the four denitration catalyst layers 13. However, the swirling-flow generating member 15D can be provided between the respective denitration catalyst layers 13 according to the number of the denitration catalyst layers 13.

In the present embodiment, the swirling-flow generating members 15D are provided between the respective denitration catalyst layers 13. However, the present invention is not limited thereto, and the swirling-flow generating member 15D can be provided in the passage 14 in the denitration catalyst layer 13.

Accordingly, by providing the swirling-flow generating members 15D formed of the plate member 27 having the fine pore 26 corresponding to each of the passages 14 of the honeycomb catalyst at a plurality of stages in the flow direction of the flue gas 12, as in the above embodiments, a swirling flow can be generated in the flue gas 12 in the passages 14 in the denitration; catalyst layer 13, and the flue gas 12 can pass through the passages 14, in a state with the airflow of the flue gas 12 being changed from a laminar flow to a turbulent flow, and thus the contact time between the flue gas 12 and the denitration catalyst can be increased. Because HCl has been supplied beforehand into the flue gas 12, the oxidation reaction efficiency between Hg in the flue gas 12 and the denitration catalyst can be improved.

With this configuration, in the air pollution control system applying the air pollution control apparatus according to the present embodiment, Hg in the flue gas 12 can be removed highly efficiently by a desulfurizer (not shown) provided on a downstream side of the air pollution control apparatus according to the present embodiment.

In this manner, according to the air pollution control apparatus of the present embodiment, by providing the swirling-flow generating member 15A including the vertical axis 22 and the four swirling-flow generating vanes 23, for example, as shown in FIG. 2, provided radially with respect to the vertical axis 22, in the passage 14 in the denitration catalyst layer 13, a swirling flow can be generated in the flue gas 12 in the passages 14 in the denitration catalyst layer 13. Therefore, the contact time between the flue gas 12 and the denitration catalyst can be increased to improve the oxidation reaction efficiency between Hg in the flue gas 12 and the denitration catalyst. In the air pollution control system applying the air pollution control apparatus according to the present embodiment, therefore, NOx in the flue gas 12 can be removed in the denitration catalyst layer 13, and SOx and Hg in the flue gas 12 can be efficiently removed in the desulfurizer.

### Industrial Applicability

As described above, the air pollution control apparatus according to the present invention is suitable to be used in processing of flue gas discharged from an apparatus that burns fossil fuel such as coal and heavy oil containing mercury, in a thermal power plant or the like, because a swirling flow can be generated in flue gas and the flue gas passes through a passage in a denitration catalyst layer, in a state with an airflow of flue gas being changed from a laminar flow to a turbulent flow, thereby increasing the contact time between the flue gas and the denitration catalyst to improve the oxidation reaction efficiency between mercury and the denitration catalyst.

### Reference Signs List

- 10: air pollution control apparatus
- 13: denitration catalyst layer
- 14: passage
- 15A: to 15D swirling-flow generating member
- 22: vertical axis
- 23: swirling-flow generating vane
- 24: ring member
- 25: spiral board
- 26: fine pore
- 27: plate member

## Claims

1. An air pollution control apparatus having at least one denitration catalyst layer that removes nitrogen oxides in flue gas from a boiler and atomizes hydrogen chloride into flue gas to oxidize mercury, wherein
the denitration catalyst layer is a honeycomb catalyst, and
the air pollution control apparatus includes a swirling-flow generating member that changes the flue gas from a laminar flow to a turbulent flow in a passage of the honeycomb catalyst.

2. The air pollution control apparatus according to claim 1, wherein the swirling-flow generating member includes a vertical axis provided in the passage, and a plurality of swirling-flow generating vanes provided radially and orthogonally to the vertical axis with a predetermined gap therebetween to generate a turbulent flow in the flue gas.

3. The air pollution control apparatus according to claim 1, wherein the swirling-flow generating member includes a vertical axis provided in the passage, and a plurality of ring members provided orthogonally to the vertical axis with a predetermined gap therebetween.

4. The air pollution control apparatus according to claim 1, wherein the swirling-flow generating member includes a vertical axis provided in the passage, and a spiral board spirally wound on the vertical axis.

5. The air pollution control apparatus according to claim 1, wherein
the swirling-flow generating member is a plate member having a fine pore corresponding to each passage of a honeycomb catalyst, and
when the denitration catalyst layers are provided at a plurality of stages in a flow direction of the flue gas, the swirling-flow generating member is provided in each passage between the denitration catalyst layers at respective stages.

6. An air pollution control system comprising:
a boiler;
a chlorinating-agent supplying unit that injects a chlorinating agent into flue gas discharged to a flue gas duct on a downstream side of the boiler;
the air pollution control apparatus according to any one of claims 1 to 5;
a NOx removal unit that removes sulfur oxides in flue gas after denitration; and
a stack that discharges denitrated gas to outside.

7. The air pollution control system according to claim 6, wherein an ammonia supplying unit that injects ammonia into flue gas discharged to a flue gas duct on a downstream side of the boiler is provided.
